# EUROPEAN PATENT APPLICATION

(11) **EP 4 717 825 A1**
(43) Date of publication of application: **01.04.2026**
(21) Application number: 25198295.5
(22) Date of filing: 26.08.2025
(51) Int. Cl.: E02F 9/08, E02F 9/16

(54) **WORKING MACHINE**

(30) Priority: 13.09.2024 JP 2024158846
(71) Applicant: Yanmar Holdings Co., Ltd., Osaka-shi, Osaka (JP)
(72) Inventor: MIKI, Takahiro, FUKUOKA (JP)
(74) Representative: Novagraaf International SA

(57) **Abstract**

[Problem] Provided is a working machine capable of ensuring ride comfort of an operator in a cabin and good forward visibility of the operator in a configuration in which a monitor and an air conditioner are arranged in the cabin.

[Solution] The working machine includes: the air conditioner arranged in a cabin on a first lateral side of a driver's seat and on a front side of the driver's seat; the monitor arranged above the air conditioner; a first frame that separates a front window into upper and lower portions, the front window being arranged in a front portion of the cabin; and a second frame arranged in the front portion on the first lateral side of the first frame and extending upward. **In** a front view, the monitor is arranged to overlap with the first frame and the second frame.

## Description

### TECHNICAL FIELD

The present invention relates to a working machine.

### BACKGROUND ART

Conventionally, a hydraulic excavator in which a monitor and an air conditioner are arranged inside a cabin is known (see, for example, Patent Document 1).

### PRIOR ART DOCUMENT

### PATENT DOCUMENT

Patent Document 1: JP-A-2022-152596

### SUMMARY OF INVENTION

### TECHNICAL PROBLEM

When the monitor is arranged in the cabin, it is necessary to arrange the monitor on the front of a driver's seat in order to ensure the visibility of the monitor by an operator sitting on the driver's seat. However, in this arrangement, the monitor blocks forward view of the operator. Meanwhile, a front portion (including a front window) of the cabin is arranged in front of the operator, and there is a frame in the front portion. Therefore, a part of the forward view of the operator is also blocked by the frame. Therefore, when the monitor is arranged in the cabin, it is necessary to arrange the monitor in consideration of a position of the frame in order to ensure good forward visibility of the operator. In addition, when the air conditioner as well as the monitor is arranged in the cabin, it is also necessary to ensure ride comfort of the operator in the cabin that is narrow.

The present invention has been made to solve the above problems, and an object thereof is to provide a working machine capable of ensuring ride comfort of an operator in a cabin and ensuring good forward visibility of the operator in a configuration in which a monitor and an air conditioner are arranged in the cabin.

### SOLUTION TO PROBLEM

A working machine according to one aspect of the present invention includes: an air conditioner arranged in a cabin on a first lateral side and on a front side with respect to a driver's seat; a monitor arranged above the air conditioner; a first frame that separates a front window into upper and lower portions, the front window being arranged in a front portion of the cabin; and a second frame that is arranged in the front portion on the first lateral side with respect to the first frame and extends upward, wherein the monitor is arranged to overlap with the first frame and the second frame in a front view.

### ADVANTAGEOUS EFFECTS OF INVENTION

It is possible to ensure the ride comfort of the operator in the cabin and the good forward visibility of the operator in the configuration in which the monitor and the air conditioner are arranged in the cabin.

### BRIEF DESCRIPTION OF DRAWINGS

Fig. 1 is a left side view illustrating a schematic configuration of a hydraulic excavator which is an example of a working machine of the present invention;
Fig. 2 is a perspective view of a cabin of the hydraulic excavator as viewed from the right front;
Fig. 3 is a perspective view of an upper front window arranged in a front portion of the cabin;
Fig. 4 is a plan view schematically illustrating an internal configuration of the cabin when the cabin is cut along a horizontal plane including line A-A of Fig. 1;
Fig. 5 is a perspective view of a right front portion of the cabin as viewed from the left rear;
Fig. 6 is a perspective view of an air conditioner and a monitor arranged in the cabin as viewed from the left front;
Fig. 7 is a front view of the cabin as viewed from the front;
Fig. 8 is a front view of the cabin in a state where an illustrations of a front window in Fig. 7 is omitted; and
Fig. 9 is a front view of the cabin in a state where illustrations of a wiper and a wiper drive unit in Fig. 8 are further omitted.

### DESCRIPTION OF EMBODIMENTS

An embodiment of the present invention will be described below with reference to the drawings.

### [1. Schematic Configuration of Working Machine]

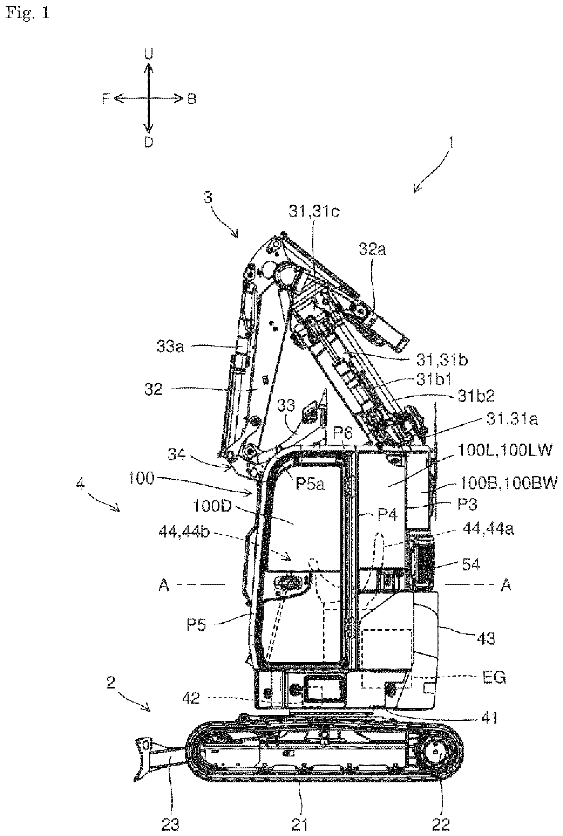

Fig. 1 is a left side view illustrating a schematic configuration of a hydraulic excavator 1 which is an example of a working machine according to an embodiment of the present invention. The hydraulic excavator 1 includes a lower traveling body 2, working equipment 3, and an upper turning body 4.

In the present embodiment, directions are defined as follows. A direction in which an operator (driver or manipulator) sitting on a driver's seat 44a arranged in a driving section 44 of an upper turning body 4 faces the front side is referred to as "front", and the opposite direction thereof is referred to as "rear". In a state where the upper turning body 4 is not turning with respect to a lower traveling body 2 (turning angle: 0 degree), a front-rear direction of the upper turning body 4 coincides with a front-rear direction of the lower traveling body 2. In the drawings, the hydraulic excavator 1 in a state where the upper turning body 4 is not turning with respect to the lower traveling body 2 is illustrated. In addition, a left side as viewed from the operator sitting on the driver's seat 44a is referred to as "left", and a right side is referred to as "right". Furthermore, a gravity direction perpendicular to the front-rear direction and the left-right direction is defined as an up-down direction, an upstream side in the gravity direction is defined as "up", and a downstream side is defined as "down". In the drawings, as necessary, the front is denoted by "F", the rear is denoted by "B", the right is denoted by "R", the left is denoted by "L", the upper side is denoted by "U", and the lower side is denoted by "D".

The lower traveling body 2 includes a pair of left and right crawlers 21, a pair of left and right traveling motors 22, and a blade 23. The left and right traveling motors 22 drive the left and right crawlers 21, respectively, so that the hydraulic excavator 1 can be moved forward and rearward. The traveling motor 22 is configured using a hydraulic motor. The blade 23 that performs ground leveling work and the like is provided on the front side of the lower traveling body 2. The blade 23 is rotated by a blade cylinder (not illustrated). The blade cylinder includes a hydraulic cylinder.

The working equipment 3 includes a boom 31, an arm 32, and a bucket 33. By independently driving the boom 31, the arm 32, and the bucket 33, excavation work of earth, sand and the like can be performed.

The boom 31 includes a lower boom 31a, an upper boom 31b, and an arm stay 31c. A proximal end portion of the lower boom 31a is connected to a right front portion of the upper turning body 4 so as to be rotatable in the up-down direction and the front-rear direction. A distal end portion of a boom cylinder (not illustrated) is connected to a distal end portion of the lower boom 31a. A proximal end portion of the boom cylinder is connected to the right front portion of the upper turning body 4. More specifically, the boom cylinder is arranged on the front of the lower boom 31a. The boom cylinder is telescopically movable. When the boom cylinder extends and retracts, the lower boom 31a rotates in the up-down direction and the front-rear direction with respect to the upper turning body 4.

A proximal end portion of the upper boom 31b is connected to a distal end portion of the lower boom 31a so as to be rotatable in the left-right direction. The arm stay 31c is connected to a distal end portion of the upper boom 31b so as to be rotatable in the left-right direction. A proximal end portion of an offset cylinder 31b1 is connected to a left side surface of the proximal end portion of the upper boom 31b. A distal end portion of the offset cylinder 31b1 is connected to a left side surface of the arm stay 31c. The offset cylinder 31b1 is telescopically movable. The left side surface of the arm stay 31c and a left side surface of a distal end portion of the lower boom 31a are connected by a link rod 31b2.

When the offset cylinder 31b1 extends and retracts, the upper boom 31b rotates in the left-right direction with respect to the lower boom 31a, and the arm stay 31c moves (offsets) in the left-right direction. At this time, the arm stay 31c rotates in the left-right direction with respect to the upper boom 31b. Thus, the arm stay 31c moves in the left-right direction without rotating in the left-right direction with respect to the lower boom 31a.

A proximal end portion of the arm 32 is connected to the arm stay 31c so as to be rotatable in the up-down direction and the front-rear direction. A distal end portion of the arm cylinder 32a is connected to the proximal end portion of the arm 32. An intermediate portion between the distal end portion and a proximal end portion of the arm cylinder 32a is connected to the arm stay 31c. The arm cylinder 32a is telescopically movable. When the arm cylinder 32a extends and retracts, the arm 32 rotates in the up-down direction and the front-rear direction with respect to the arm stay 31c.

The bucket 33 is connected to the distal end portion of the arm 32 so as to be rotatable in the up-down direction and the front-rear direction. The bucket 33 is also connected to the arm 32 via a bucket link 34. A proximal end portion of the bucket cylinder 33a is connected to the proximal end portion of the arm 32. A distal end portion of the bucket cylinder 33a is connected to the bucket link 34. The bucket cylinder 33a is telescopically movable. When the bucket cylinder 33a extends and retracts, the bucket 33 rotates in the up-down direction and the front-rear direction with respect to the arm 32.

The boom cylinder, the offset cylinder 31b1, the arm cylinder 32a, and the bucket cylinder 33a are configured using hydraulic cylinders.

The upper turning body 4 is located above the lower traveling body 2 and is provided to be turnable with respect to the lower traveling body 2 via a turning bearing (not illustrated). The upper turning body 4 includes a turning frame 41, a turning motor 42, a machine room 43, a driving section 44, and a cabin 100. That is, the hydraulic excavator 1 includes the cabin 100.

The upper turning body 4 turns via the turning bearing by driving of the turning motor 42 arranged in the turning frame 41. The turning motor 42 is configured using a hydraulic motor.

The machine room 43 houses an engine EG. The engine EG is a drive source of the hydraulic excavator 1. The engine EG is configured using a diesel engine, but is not limited thereto, and may be configured using, for example, a gasoline engine.

The machine room 43 houses not only the engine EG but also a plurality of hydraulic pumps (not illustrated). Each of the hydraulic pumps supplies hydraulic oil (pressure oil) to a hydraulic motor and a hydraulic cylinder. Examples of the hydraulic motor include the left and right traveling motors 22 and the turning motor 42. Examples of the hydraulic cylinder include the blade cylinder, the boom cylinder, the offset cylinder 31b1, the arm cylinder 32a, and the bucket cylinder 33a. The hydraulic motor and the hydraulic cylinder driven by the hydraulic oil are collectively referred to as a hydraulic actuator.

The driving section 44 is arranged on the upper left side of the upper turning body 4. More specifically, the driving section 44 is arranged adjacent left to the working equipment 3. The driver's seat 44a is provided in the driving section 44. A plurality of operation members 44b are arranged around the driver's seat 44a. The plurality of operation members 44b include a lever, a switch, a pedal, and the like. The hydraulic actuator is driven when the operator sits on the driver's seat 44a and operates the plurality of operation members 44b. Thus, it is possible to perform traveling of the lower traveling body 2, ground leveling work by the blade 23, excavation work by the working equipment 3, turning of the upper turning body 4, and the like.

The cabin 100 is arranged to cover the driving section 44. That is, the cabin 100 is arranged on the upper left side of the upper turning body 4 similarly to the driving section 44. The working equipment 3 is arranged on the right side of the cabin 100. Hereinafter, a configuration of the cabin 100 will be described.

### [2. Configuration of Cabin]

### (2-1. External Configuration of Cabin)

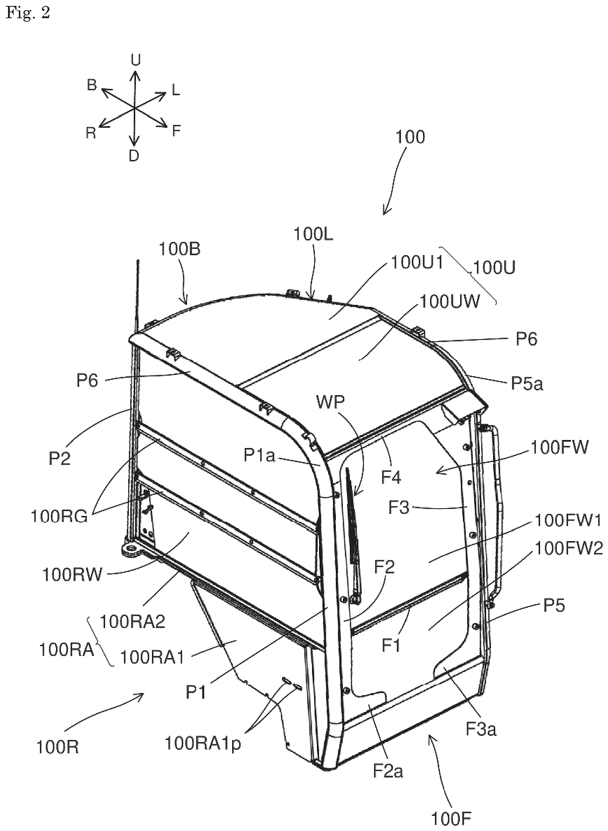

Fig. 2 is a perspective view of the cabin 100 as viewed from the right front. The cabin 100 includes a front portion 100F, a right side portion 100R, a rear portion 100B (see Fig. 1), a left side portion 100L (see Fig. 1), a door 100D (see Fig. 1), and an upper portion 100U. The cabin 100 has an open bottom.

The front portion 100F is arranged in front of the driver's seat 44a (see Fig. 1) in the cabin 100 and covers the driver's seat 44a from the front. The front portion 100F constitutes a front surface of the cabin 100, and thus can also be referred to as a front surface portion. The front portion 100F is arranged between a right front pillar P1 and a left front pillar P5. Here, the right front pillar P1 is erected at a lower right front portion of the driving section 44 (see Fig. 1) and extends upward. The left front pillar P5 is erected at a lower left front portion of the driving section 44 and extends upward.

A front window 100FW is provided in the front portion 100F. The front window 100FW is made of, for example, a transparent plate such as glass. Thus, the operator sitting on the driver's seat 44a can visually recognize the front through the front window 100FW. The transparent plate may be made of resin (for example, polycarbonate). Details of the front portion 100F will be described later.

The right side portion 100R is arranged on the right side of the driver's seat 44a in the cabin 100 and covers the driver's seat 44a from the right side. The right side portion 100R constitutes a right side surface of the cabin 100, and thus can also be referred to as a right side surface portion. The right side portion 100R is connected to the front portion 100F via the right front pillar P1. The right side portion 100R includes a side wall portion 100RA and a right window 100RW.

The side wall portion 100RA is arranged on the right side of the driver's seat 44a. Here, one side in the left-right direction is also referred to as a "first lateral side", and the other side is also referred to as a "second lateral side". Then, it can be said that the cabin 100 has the side wall portion 100RA arranged on the first lateral side (the right side in the example of Fig. 2) with respect to the driver's seat 44a.

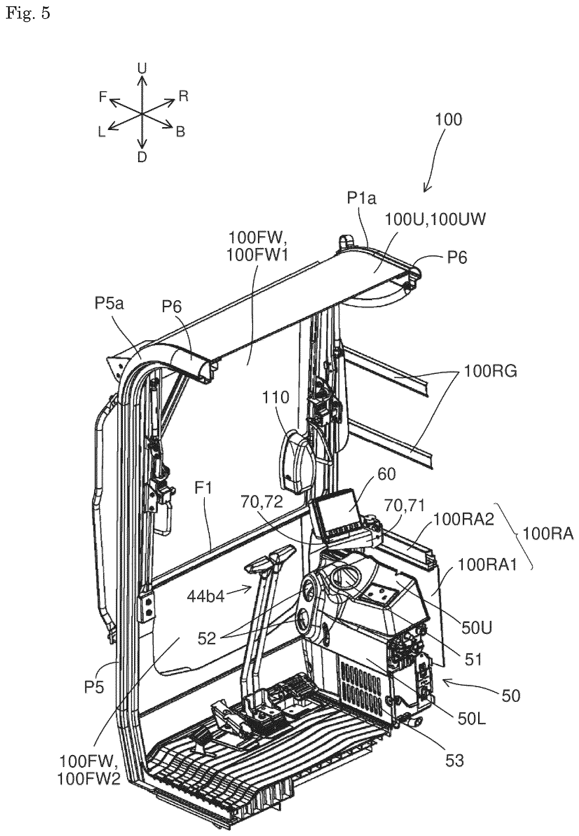

The side wall portion 100RA includes a lower wall 100RA1 and a horizontal frame 100RA2. The lower wall 100RA1 is a wall extending in the front-rear direction and the up-down direction. The lower wall 100RA1 is provided with an outside air intake port 100RA1p. The outside air intake port 100RA1p is an opening for taking air (outside air) outside the cabin 100 into the inside by an air conditioner 50 (see Fig. 5 and the like) to be described later. The number of the outside air intake ports 100RA1p is two in the present embodiment, but is not particularly limited.

The horizontal frame 100RA2 extends in the front-rear direction along an upper end of the lower wall 100RA1. A front end of the horizontal frame 100RA2 is connected between an upper end and a lower end of the right front pillar P1. A rear end of the horizontal frame 100RA2 is connected to a lower end portion of a right rear pillar P2 extending in the up-down direction. The right rear pillar P2 is erected on an upper surface of the machine room 43 (see Fig. 1).

The right window 100RW is arranged above the lower wall 100RA1 via the horizontal frame 100RA2. The right window 100RW is made of, for example, a transparent plate such as glass. Thus, the operator can visually recognize the right from the inside of the cabin 100 through the right window 100RW. The transparent plate may be made of resin.

Two guide frames 100RG are arranged on the right side of the right window 100RW. The respective guide frames 100RG are stretched between the right front pillar P1 and the right rear pillar P2 in the front-rear direction and arranged apart from each other in the up-down direction. The guide frames 100RG are provided for the purpose of reinforcing the cabin 100 and ensuring the safety of the operator. For example, even if the hydraulic excavator 1 falls down by any chance, the guide frames 100RG can prevent the operator from breaking through the right window 100RW and being thrown to the outside of the cabin 100. Note that the number of the guide frames 100RG is not limited to two as described above, and may be one or three or more.

The rear portion 100B is arranged behind the driver's seat 44a in the cabin 100 and covers the driver's seat 44a from behind. The rear portion 100B constitutes a rear surface of the cabin 100, and thus can also be referred to as a rear surface portion. The rear portion 100B is connected to the right side portion 100R via the right rear pillar P2.

As illustrated in Fig. 1, the rear portion 100B includes a rear window 100BW. The rear window 100BW is made of, for example, a transparent plate such as glass. Thus, the operator can visually recognize the rear from the inside of the cabin 100 through the rear window 100BW. The transparent plate may be made of resin. The rear window 100BW is curved such that a left end portion is located on the front of a right end portion.

The left side portion 100L is arranged on the left rear of the driver's seat 44a in the cabin 100 and covers the driver's seat 44a from the left rear. The left side portion 100L constitutes a left side surface of the cabin 100, and thus can also be referred to as a left side surface portion. The left side portion 100L is connected to the rear portion 100B via a left rear pillar P3 extending in the up-down direction. The left rear pillar P3 is erected on the upper surface of the machine room 43.

As illustrated in Fig. 1, a center pillar P4 extending in the up-down direction is arranged between the left front pillar P5 and the left rear pillar P3. The left side portion 100L is connected to the center pillar P4 and the left rear pillar P3. When the cabin 100 is viewed from the rear, the center pillar P4 is arranged on the left side (the second lateral side) of the left rear pillar P3.

The left side portion 100L includes a left window 100LW. The left window 100LW is arranged to be inclined with respect to the front-rear direction such that a left end portion is located on the front of a right end portion. The left window 100LW is made of, for example, a transparent plate such as glass. Thus, the operator can visually recognize the left rear from the inside of the cabin 100 through the left window 100LW. The transparent plate may be made of resin.

The door 100D is arranged on the left front of the driver's seat 44a in the cabin 100. The door 100D is rotatably supported by the center pillar P4 so as to open forward. The operator can get on and off the driving section 44 by opening and closing the door 100D.

As illustrated in Fig. 2, the upper portion 100U is arranged above the driver's seat 44a in the cabin 100 and covers the driver's seat 44a from above. The upper portion 100U constitutes an upper surface of the cabin 100, and thus can also referred to as an upper surface portion.

The upper portion 100U is connected to an upper pillar P6. One end portion of the upper pillar P6 is connected to an upper end portion of the right front pillar P1 via a right curved portion P1a. The other end portion of the upper pillar P6 is connected to an upper end portion of the left front pillar P5 via a left curved portion P5a. The upper pillar P6 is supported by the right rear pillar P2, the left rear pillar P3, and the center pillar P4. Therefore, the upper pillar P6 extends rearward from one end portion side along the upper end portion of the right side portion 100R, extends leftward along an upper end portion of the rear portion 100B, further extends to the left front along an upper end portion of the left side portion 100L, and extends forward, that is, toward the other end portion side above the door 100D.

A top plate 100U1 made of metal is arranged in the upper portion 100U. The top plate 100U1 is provided with a skylight 100UW. The skylight 100UW is made of, for example, a transparent plate made of a transparent resin. Thus, the operator can visually recognize the upper side from the inside of the cabin 100 through the skylight 100UW, and can confirm the movement of the working equipment 3 through the skylight 100UW, for example. The skylight 100UW may be made of transparent glass.

### (2-2. Detailed Configuration of Front Portion)

The front window 100FW arranged in the front portion 100F of the cabin 100 includes an upper front window 100FW1 and a lower front window 100FW2. The upper front window 100FW1 and the lower front window 100FW2 are partitioned by a first frame F1 extending in the left-right direction. In other words, the front window 100FW is separated into the upper front window 100FW1 and the lower front window 100FW2 by the first frame F1. As described above, the hydraulic excavator 1 includes the first frame F1, which separates the front window 100FW into upper and lower portions, in the front portion 100F.

The lower front window 100FW2 is arranged in a lower front portion of the driver's seat 44a. The lower front window 100FW2 is supported by a groove (not illustrated) provided in the front portion 100F and is arranged to be slidable in the up-down direction.

The upper front window 100FW1 can change its posture between a closed state and an open state via a link mechanism (not illustrated) provided in the cabin 100. Here, the closed state of the upper front window 100FW1 refers to a state where the upper front window 100FW1 is located in front of the driver's seat 44a and faces the lower front window 100FW2 arranged in the lower front portion of the driver's seat 44a with the first frame F1 interposed therebetween in the up-down direction (see Fig. 2). In the closed state, no open space such as a gap is formed between the upper front window 100FW1 and the lower front window 100FW2. On the other hand, the open state of upper front window 100FW1 refers to a state where the front of the driver's seat 44a is opened by rearward movement of an upper end and upward movement of a lower end of the upper front window 100FW1, that is, a state where an open space is formed between the upper front window 100FW1 and the lower front window 100FW2.

In the open state of the upper front window 100FW1, since the upper side of the lower front window 100FW2 is opened, the lower front window 100FW2 can be slid upward. When the lower front window 100FW2 is slid upward, the lower front window 100FW2 can be removed from the groove. When the lower front window 100FW2 is removed, the open space formed in front of the driver's seat 44a is further expanded. Thus, the operator can easily visually recognize a wide range of a work site in the front through the open space.

The hydraulic excavator 1 includes a second frame F2, a third frame F3, and a fourth frame F4 in addition to the first frame F1. In the front portion 100F, the second frame F2 is arranged on the first lateral side (the right side in the example of Fig. 2) with respect to the first frame F1 and extends upward. The second frame F2 is connected to the right front pillar P1. A lower end portion of the second frame F2 is provided with a right bent portion F2a extending to the second lateral side (the left side in the example of Fig. 2).

In the front portion 100F, the third frame F3 is arranged on the second lateral side (the left side in the example of Fig. 2) with respect to the first frame F1 and extends upward. The third frame F3 is connected to the left front pillar P5. A left bent portion F3a extending to the first lateral side (the right side in the example of Fig. 2) is provided in a lower end portion of the third frame F3. The right bent portion F2a and the left bent portion F3a are arranged apart from each other in the left-right direction, but may be connected to each other.

In the front portion 100F, the fourth frame F4 connects an upper end portion of the second frame F2 and an upper end portion of the third frame F3 in the left-right direction. The fourth frame F4 is fixed to a reinforcing frame (not illustrated) that connects the right curved portion P1a and the left curved portion P5a in the left-right direction. The fourth frame F4 is arranged on the front of the reinforcing frame.

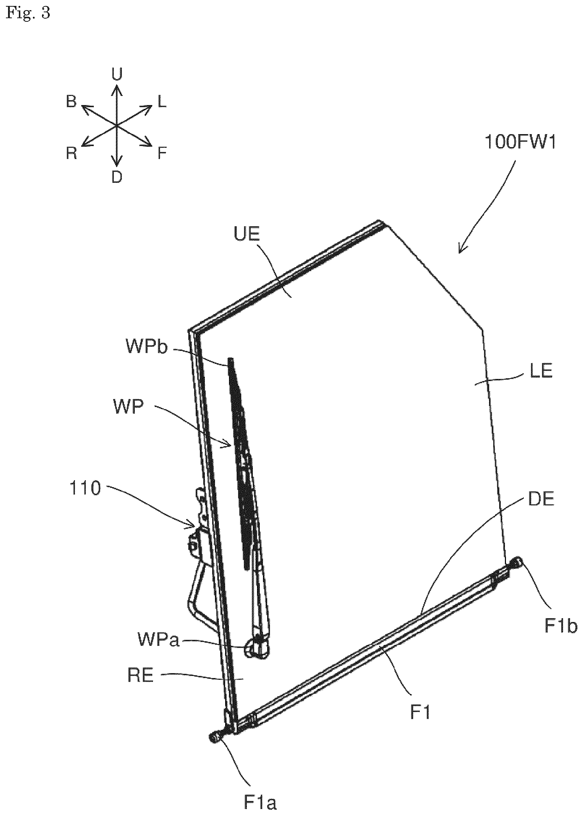

Fig. 3 is a perspective view of upper front window 100FW1. The first frame F1 is attached to a lower edge DE of the upper front window 100FW1. A right end portion F1a and a left end portion F1b of the first frame F1 are slidably supported by guides (not illustrated) extending in the up-down direction in the cabin 100. The right end portion F1a is covered from the front by the second frame F2 (see Fig. 2). That is, the second frame F2 is arranged to overlap with the right end portion F1a of the first frame F1. In addition, the left end portion F1b is covered from the front by the third frame F3 (see Fig. 2). That is, the third frame F3 is arranged to overlap with the left end portion F1b of the first frame F1. The upper front window 100FW1 is formed in a pentagonal shape whose upper left portion is cut out, but may be formed in a quadrangular shape without such a cutout portion.

A wiper WP is attached to the front side of the upper front window 100FW 1 (the side opposite to the driver's seat 44a). A lower end portion WPa serving as a pivot of the wiper WP is located on the right side of the upper front window 100FW1, that is, on the first lateral side. On the other hand, a wiper drive unit 110 is attached to the rear side (the driver's seat 44a side) of the upper front window 100FW1. The wiper drive unit 110 is a drive mechanism that drives the wiper WP, and includes a motor and the like. The wiper drive unit 110 is attached to the first lateral side of the upper front window 100FW1 and is connected to the wiper WP via a shaft. The shaft is a rotary shaft of the wiper WP, and is provided to penetrate the upper front window 100FW1.

In the present embodiment, the shaft is attached to the lower end portion WPa of the wiper WP, and an upper end portion WPb of the wiper WP swings about the lower end portion WPa. Note that a configuration may be employed in which the rotary shaft is attached to the upper end portion WPb of the wiper WP, and the lower end portion WPa of the wiper WP swings about the upper end portion WPb. As described above, the hydraulic excavator 1 of the present embodiment includes the wiper WP provided in the front window 100FW of the cabin 100 and the wiper drive unit 110 attached to the front window 100FW to drive the wiper WP. The wiper drive unit 110 is attached to the first lateral side of the front window 100FW.

The second frame F2, the third frame F3, and the fourth frame F4 illustrated in Fig. 2 are arranged on the front of the upper front window 100FW1 and the lower front window 100FW2. In the closed state of the upper front window 100FW1, a right edge RE and a left edge LE (see Fig. 3) of the upper front window 100FW1 overlap with the second frame F2 and the third frame F3, respectively, and an upper edge UE (see Fig. 3) of the upper front window 100FW1 overlaps with the fourth frame F4. In addition, a right edge of the lower front window 100FW2 overlaps with the second frame F2, and a left edge of the lower front window 100FW2 overlaps with the third frame F3.

### (2-3. Internal Configuration of Cabin)

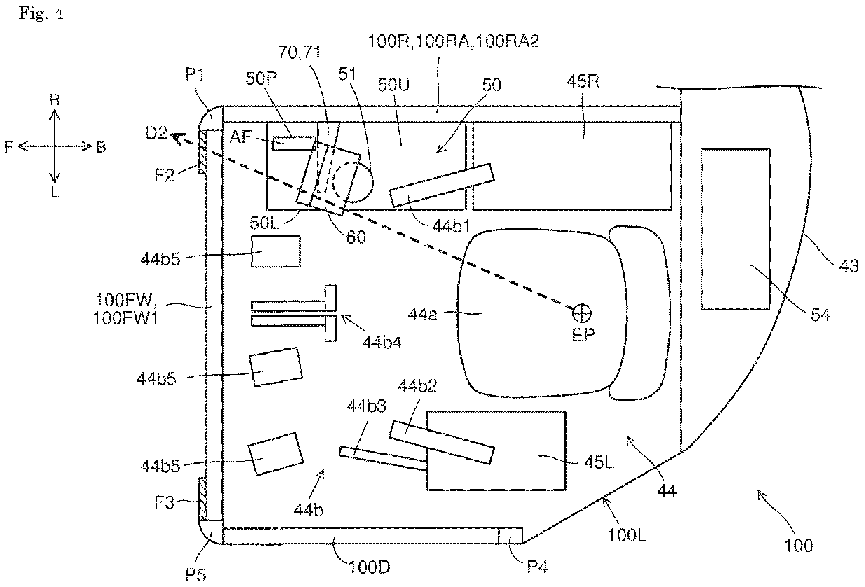

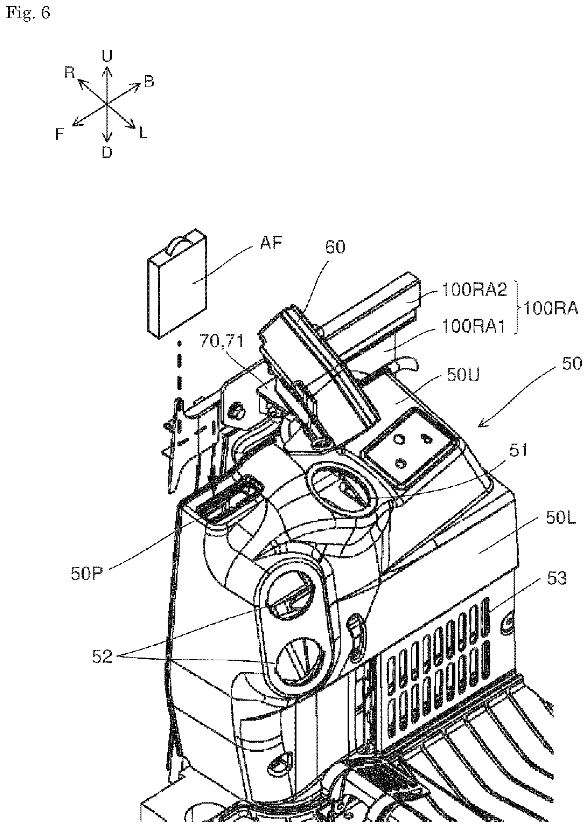

Next, an internal configuration of the cabin 100 will be described. Fig. 4 is a plan view schematically illustrating the internal configuration of the cabin 100 when the cabin 100 is cut along a horizontal plane including line A-A of Fig. 1. The line A-A is a horizontal line passing above the first frame F1. Fig. 5 is a perspective view of a right front portion of the cabin 100 as viewed from the left rear. **In** Fig. 5, the right window 100RW is not illustrated for the sake of convenience. Fig. 6 is a perspective view of the air conditioner 50 and a monitor 60 arranged in the cabin 100 as viewed from the left front.

### <<2-3-1. Operation Member>>

As illustrated in Fig. 4, in the cabin 100, a right operation lever 44b1, a left operation lever 44b2, a function restriction lever 44b3, a pair of traveling levers 44b4, and a plurality of pedals 44b5 are provided as the operation members 44b.

The right operation lever 44b1 is supported by a right control box 45R arranged on the right side of the driver's seat 44a. The left operation lever 44b2 and the function restriction lever 44b3 are supported by a left control box 45L arranged on the left side of the driver's seat 44a. The function restriction lever 44b3 is a lever configured to switch on and off of driving of the hydraulic actuator, and is provided to restrict the function of the hydraulic actuator as necessary. The pair of traveling levers 44b4 and the plurality of pedals 44b5 are arranged in front of the driver's seat 44a.

### <<2-3-2. Air Conditioner>>

The air conditioner 50 is arranged on the right front side of the driver's seat 44a. That is, the hydraulic excavator 1 includes the air conditioner 50 arranged on first lateral side and on the front side with respect to the driver's seat 44a in the cabin 100. The air conditioner 50 has a substantially rectangular parallelepiped shape, and is arranged adjacent left to (on the second lateral side of) the side wall portion 100RA. The air conditioner 50 is arranged below the first frame F1 (see Fig. 2).

Devices necessary for air conditioning (air temperature adjustment), such as an evaporator, a blower, and a heater core, are arranged inside the air conditioner 50. One upper surface vent 51 is provided in an upper surface portion 50U of the air conditioner 50. That is, the air conditioner 50 has the upper surface vent 51. The number of the upper surface vents 51 is not limited to one as described above, and may be two or more. On a left side surface portion 50L of the air conditioner 50, two side surface vents 52 are provided side by side in the up-down direction on the front side, and an air inlet 53 is provided in a lower rear portion. The number of the side surface vents 52 is not limited to two as described above, and may be one or three or more. A right side surface portion of the air conditioner 50 faces the side wall portion 100RA.

An outdoor unit 54 (see Fig. 1) is arranged behind the driver's seat 44a and below the rear portion 100B. The outdoor unit 54 includes a compressor that compresses a refrigerant, a condenser configured to perform heat exchange, and the like. The refrigerant is circulated between the air conditioner 50 and the outdoor unit 54 to perform heat exchange in each of the evaporator of the air conditioner 50 and the condenser of the outdoor unit 54, whereby air (inside air) in the cabin 100 sucked from the air inlet 53 of the air conditioner 50 or air (outside air) taken into the air conditioner 50 from the outside air intake port 100RA1p (see Fig. 2) is cooled. The blower is driven to blow cold air from at least one of the upper surface vent 51 and the side surface vent 52 into the cabin 100. On the other hand, cooling water increased in temperature in the engine EG is circulated through the heater core, and air is blown to the heater core, whereby hot air is blown into the cabin 100 from at least one of the upper surface vent 51 and the side surface vent 52.

**In** the upper surface portion 50U of the air conditioner 50, an opening 50P is provided on the front of the upper surface vent 51. The opening 50P is formed in an elongated rectangular shape extending in the front-rear direction in a plan view. An outside air filter AF having a substantially rectangular parallelepiped shape is mounted to the opening 50P so as to be drawable upward. The outside air filter AF can be replaced by drawing the mounted outside air filter AF upward to be taken out of the opening 50P and fitting a new outside air filter AF into the opening 50P from above (see Fig. 6).

**In** a state where the outside air filter AF is mounted to the opening 50P, air taken into the air conditioner 50 from the outside of the cabin 100 through the outside air intake port 100RA1p (see Fig. 2) passes through the outside air filter AF. Thus, clean air after dust has been removed by the outside air filter AF is supplied to the inside of the air conditioner 50. As described above, the air conditioner 50 has the opening 50P in the upper surface portion 50U to which the outside air filter AF is mounted in a drawable manner.

### <<2-3-3. Monitor>>

The monitor 60 is arranged above the air conditioner 50. The monitor 60 is a display device that displays various types of information. For example, the monitor 60 displays various settings in the hydraulic excavator 1, a remaining amount of fuel, an hour meter, an image captured by a monitoring camera when the monitoring camera is mounted, and the like. The monitor 60 is arranged above the air conditioner 50 as follows.

As illustrated in Figs. 4 to 6, a beam 70 is fixed to the horizontal frame 100RA2 included in the side wall portion 100RA of the right side portion 100R of the cabin 100. The horizontal frame 100RA2 extends in the front-rear direction above (at a height position of) the air conditioner 50. The beam 70 includes a beam body 71 and an attachment stay 72 (see Fig. 5). The beam body 71 is fastened to a left side surface of the horizontal frame 100RA2 with a bolt or the like and extends leftward. Thus, the beam 70 is arranged to protrude from the side wall portion 100RA to the second lateral side, and is arranged above the air conditioner 50.

The attachment stay 72 is fixed to an upper surface of the beam body 71 by welding or the like. The monitor 60 is fixed to the attachment stay 72 of the beam 70 using a bolt or the like. Thus, the monitor 60 is arranged above the air conditioner 50 in the state of being supported by the beam 70. As described above, the hydraulic excavator 1 includes the monitor 60 arranged above the air conditioner 50. In addition, the hydraulic excavator 1 includes the beam 70 that supports the monitor 60. The beam 70 may be fixed to the horizontal frame 100RA2 by another method such as being hooked to the horizontal frame 100RA2.

Since the monitor 60 is arranged above the air conditioner 50, a space above the air conditioner 50 is effectively used as a space for arranging the monitor 60 in the cabin 100. Thus, even when the cabin 100 has a small interior space, the air conditioner 50 and the monitor 60 can be arranged collectively (to be compact in the up-down direction) to ensure ride comfort of the operator in the cabin 100 and to ensure a pleasant interior space by the air conditioner 50.

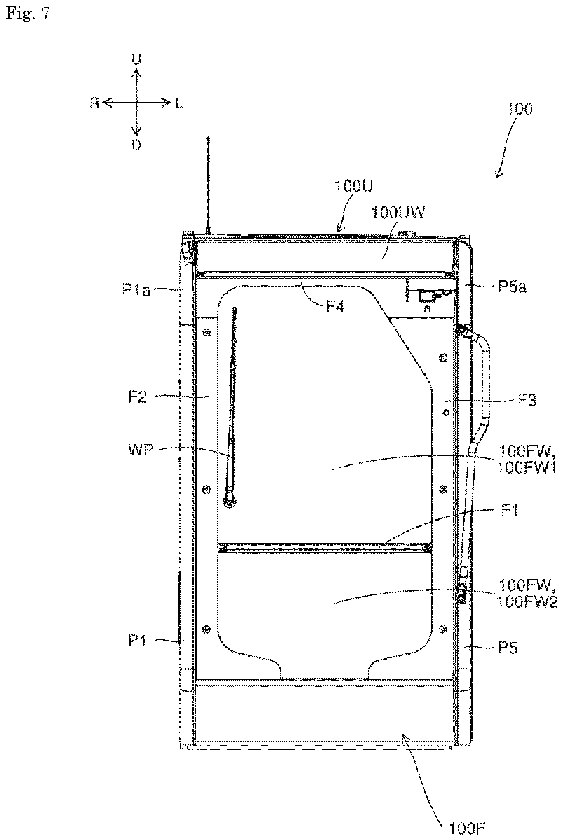

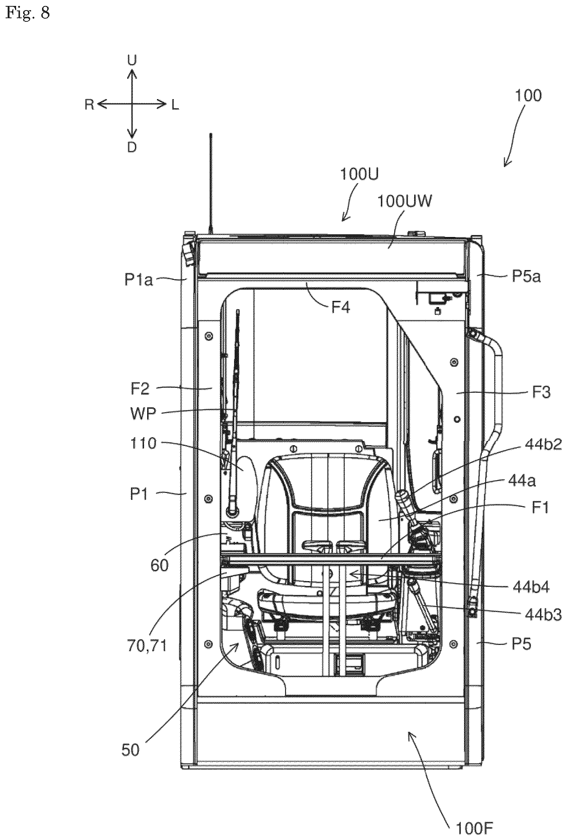

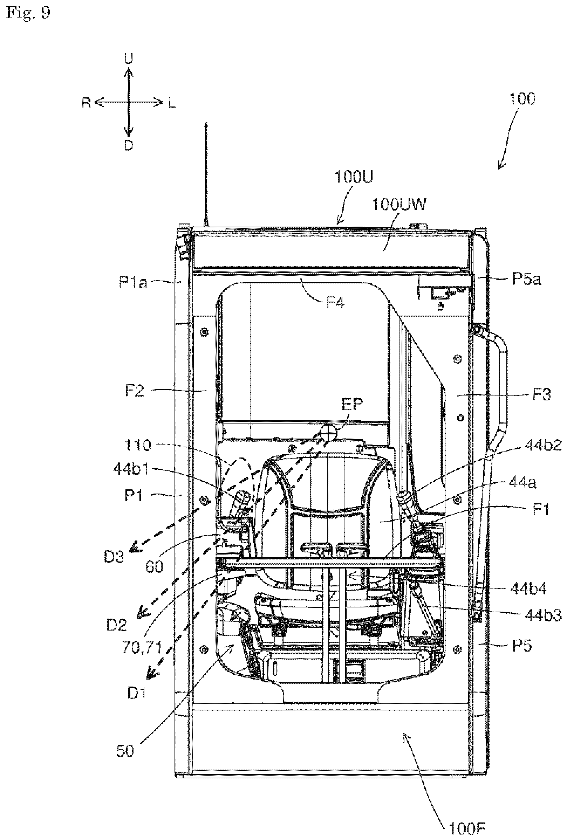

Fig. 7 is a front view of the cabin 100 as viewed from the front. Fig. 8 is a front view of the cabin 100 in a state where an illustration of the front window 100FW in Fig. 7 is omitted. Fig. 9 is a front view of the cabin 100 in a state where illustrations of the wiper WP and the wiper drive unit 110 in Fig. 8 are further omitted. In the present embodiment, as illustrated in Figs. 8 and 9, the monitor 60 is arranged to overlap with the first frame F1 and the second frame F2 in a front view. More specifically, the monitor 60 is arranged to protrude upward from the first frame F1 in the front view. In addition, in the front view, the monitor 60 is arranged to protrude to the left side (the second lateral side) from the second frame F2.

In the configuration in which the first frame F1 and the second frame F2 are arranged in the front portion 100F of the cabin 100, the first frame F1 and the second frame F2 are located in front of the operator when the operator sits on the driver's seat 44a. Therefore, a part of forward view of the operator is blocked by the first frame F1 and the second frame F2. In Fig. 9, an eye point of the operator at the time of design is indicated by EP, a forward line-of-sight direction, which passes through the first frame F1, of the operator sitting on the driver's seat 44a is indicated by D1, and a forward line-of-sight direction which passes through the second frame F2 is indicated by D2 (similarly, the line-of-sight direction D2 is illustrated in Fig. 4). In this case, the forward view in the line-of-sight direction D1 is blocked by the first frame F1, and the forward view in the line-of-sight direction D2 is blocked by the second frame F2.

In addition, in the configuration in which the air conditioner 50 is arranged on the first lateral side and on the front the driver's seat 44a side in the cabin 100 and the monitor 60 is arranged above the air conditioner 50, the monitor 60 is located obliquely in front of the operator when the operator sits on the driver's seat 44a (see Fig. 4). Thus, the operator can visually recognize the monitor 60, and the visibility of the monitor 60 is ensured. Meanwhile, a part of the forward view of the operator is blocked by the monitor 60.

As illustrated in Figs. 8 and 9, in the configuration in which the monitor 60 is arranged to overlap with the first frame F1 and the second frame F2 in the front view, the monitor 60 is arranged to overlap in the line-of-sight direction D1 crossing the first frame F1, and the monitor 60 is arranged to overlap in the line-of-sight direction D2 crossing the second frame F2 as viewed from the operator sitting on the driver's seat 44a. The line-of-sight directions D1 and D2 are directions in which the forward view of the operator is originally blocked by the first frame F1 and the second frame F2, respectively. Therefore, when the monitor 60 is arranged to overlap in the line-of-sight directions D1 and D2, the influence of the arrangement of the monitor 60 on the forward visibility of the operator can be reduced.

For example, if the monitor 60 is arranged apart from (without overlapping with) the first frame F1 and the second frame F2 in the front view, the area of a region where the forward view of the operator is blocked is simply the sum of the area of a region where the forward view is blocked by the first frame F1 and the second frame F2 and the area of a region where the forward view is blocked by the monitor 60. In this regard, in the present embodiment, since the region where the forward view of the operator is blocked by the first frame F1 and the second frame F2 and the region where the forward view of the operator is blocked by the monitor 60 partially overlap, the total area of the region where the forward view of the operator is blocked can be reduced as compared with the configuration in which the monitor 60 is arranged apart from the first frame F1 and the second frame F2 in the front view. Thus, it is possible to reduce the influence of the arrangement of the monitor 60 obstructing the forward view of the operator. As a result, it is possible to ensure good forward visibility of the operator also in the configuration in which the monitor 60 is arranged in the cabin 100.

In particular, in the hydraulic excavator 1 of the present embodiment, the air conditioner 50 is arranged adjacent to the side wall portion 100RA of the cabin 100, and the monitor 60 is arranged above the air conditioner 50. In such a configuration of the hydraulic excavator 1, the above-described effects can be effectively obtained by arranging the monitor 60 so as to overlap with the first frame F1 and the second frame F2 in the front view.

In the configuration in which the monitor 60 is arranged above the air conditioner 50, the monitor 60 can be easily arranged to overlap with the second frame F2 in the front view if the beam 70 supporting the monitor 60 can be arranged at a position close to the side wall portion 100RA. From the viewpoint of arranging the beam 70 at a position close to the side wall portion 100RA in this manner, the beam 70 is desirably arranged to protrude from the side wall portion 100RA to the second lateral side.

From the viewpoint of arranging the monitor 60 at a height position where the operator can easily visually recognize in the cabin 100, it is desirable to fix the beam 70 to the horizontal frame 100RA2 extending in the front-rear direction above the air conditioner 50. The monitor 60 is desirably supported by the beam 70 fixed to the horizontal frame 100RA2.

Since the beam 70 has the beam body 71, the monitor 60 can be arranged above the beam body 71 via the attachment stay 72 as described above. In order to reliably arrange the monitor 60 to overlap with the first frame F1 in the front view, the beam body 71 arranged below the monitor 60 is desirably arranged as follows in relation to the first frame F1. That is, the beam body 71 is desirably arranged below the first frame F1 in the front view as illustrated in Figs. 8 and 9.

In Fig. 9, the outer shape of the wiper drive unit 110 illustrated in Fig. 8 is indicated by a broken line. In addition, a line-of-sight direction passing through the wiper drive unit 110 as viewed from the operator sitting on the driver's seat 44a is denoted by D3. As illustrated in Fig. 9, the monitor 60 is arranged to overlap with the wiper drive unit 110 in the front view in the present embodiment. Although a part of the monitor 60 overlaps with the wiper drive unit 110 in the front view in Fig. 9, the entire monitor 60 may overlap with the wiper drive unit 110. When the monitor 60 is arranged in this manner, as viewed from the operator sitting on the driver's seat 44a, in the line-of-sight direction D3 passing through the wiper drive unit 110, that is, in a direction in which the forward view of the operator is originally blocked by the wiper drive unit 110, the monitor 60 similarly blocking the forward view is arranged to overlap. Thus, for example, as compared with a configuration in which the monitor 60 is arranged without overlapping in the line-of-sight direction D3 (a configuration in which the monitor 60 is arranged apart from the wiper drive unit 110 in the front view), the influence of the arrangement of the monitor 60 on the forward visibility is reduced, and the good forward visibility is ensured.

In order to minimize the influence of the arrangement of the monitor 60 on the forward visibility, the monitor 60 is desirably arranged to overlap with both the second frame F2 and the wiper drive unit 110 at the same time in the front view. In order to achieve such an arrangement of the monitor 60, the wiper drive unit 110 is desirably arranged on the same lateral side as the second frame F2 arranged on the first lateral side in the front view. That is, the wiper drive unit 110 is desirably attached to the first lateral side of the front window 100FW.

As illustrated in Fig. 4, in the present embodiment, a part of the upper surface vent 51 of the air conditioner 50 is arranged on the driver's seat 44a side (rear side) with respect to the monitor 60, and the remaining part of the upper surface vent 51 overlaps with the monitor 60 in the plan view. in the plan view, the entire upper surface vent 51 may be arranged on the driver's seat 44a side with respect to the monitor 60.

In order to reliably ensure the pleasant interior space in the cabin 100 by the air conditioner 50, it is desirable to prevent the air (for example, cold air), blown out from the upper surface vent 51 of the air conditioner 50 toward the driver's seat 44a, from being blocked by the monitor 60 arranged above the air conditioner 50 as much as possible. From such a viewpoint, at least a part of the upper surface vent 51 of the air conditioner 50 is desirably arranged on the driver's seat 44a side (to be shifted) with respect to the monitor 60 in the plan view as in the present embodiment.

As illustrated in Fig. 4, in the present embodiment, the entire upper surface vent 51 of the air conditioner 50 is arranged to be shifted toward the driver's seat 44a side with respect to the beam 70 in the plan view. In the plan view, a part of the upper surface vent 51 may overlap with the beam 70, and the remaining part of the upper surface vent 51 may be arranged to be shifted toward the driver's seat 44a with respect to the beam 70.

As described above, when at least a part of the upper surface vent 51 is arranged on the driver's seat 44a side with respect to the beam 70 in the plan view, it is easy to achieve the configuration in which at least a part of the upper surface vent 51 is arranged on the driver's seat 44a side with respect to the monitor 60 supported by the beam 70.

As illustrated in Fig. 4, in the present embodiment, a part of the monitor 60 is arranged outside the opening 50P, and the remaining portion of the monitor 60 is arranged to overlap with the opening 50P in the plan view. The entire monitor 60 may be arranged outside the opening 50P in the plan view.

As described above, when at least a part of monitor 60 is arranged outside opening 50P in the plan view, the possibility that the outside air filter AF interferes with the monitor 60 above the opening 50P when the outside air filter AF is inserted into and removed from the opening 50P is reduced. This facilitates replacement work of the outside air filter AF and facilitates maintenance.

In the present embodiment, at least a part of the monitor 60 is arranged behind the opening 50P in the plan view. In such an arrangement of the monitor 60, since the monitor 60 is arranged close to the driver's seat 44a, the visibility of the monitor by the operator is improved.

In the present embodiment, in the plan view, the monitor 60 is arranged to be inclined toward the left side, that is, the second lateral side with respect to the front-rear direction in which the opening 50P extends (particularly, see Fig. 4). In such an inclined arrangement of the monitor 60, a display screen of the monitor 60 faces the inside of the cabin 100 (for example, the driver's seat 44a side) with respect to the front-rear direction. Therefore, the operator sitting on the driver's seat 44a can easily visually recognize the display screen of the monitor 60. In addition, since the opening 50P has a shape extending in the front-rear direction in the plan view, the outside air filter AF can be easily taken in and out of the opening 50P along the side wall portion 100RA of the cabin 100, and the replacement work of the outside air filter AF can be facilitated.

As in the present embodiment, in the configuration in which the outside air intake port 100RA1p is provided in the side wall portion 100RA of the cabin 100 to take the outside air from the outside of the cabin 100 into the inside, it is desirable to arrange the outside air filter AF on the upstream side in a flow path of the taken outside air as much as possible from the viewpoint that dust contained in the outside air can be efficiently removed by the outside air filter AF. From this viewpoint, as illustrated in Fig. 4, the opening 50P to which the outside air filter AF is mounted is desirably arranged on the side wall portion 100RA side in the upper surface portion 50U in the plan view. That is, the opening 50P is desirably arranged on the first lateral side of the upper surface portion 50U of the air conditioner 50 in the plan view.

### [3. Supplementary Note]

The hydraulic excavator 1 may have a configuration in which a hydraulic device such as a hydraulic actuator (for example, a hydraulic motor and a hydraulic cylinder) and an actuator driven by electric power are used in combination. Examples of the actuator driven by electric power include an electric traveling motor, an electric cylinder, and an electric turning motor.

Although the hydraulic excavator 1 includes the engine EG (see Fig. 1) as a prime mover, the prime mover may be an electric motor.

Although the hydraulic excavator 1 has been described as an example of the working machine in the present embodiment, the working machine is not limited to the hydraulic excavator 1, and may be a construction machine such as a mobile crane. In addition, the working machine may be an agricultural machine such as a combine harvester or a tractor.

### [4. Additional Note]

The working machine described in the present embodiment can be expressed as in the following additional notes.

The working machine according to Additional Note (1) includes:
an air conditioner arranged in a cabin on a first lateral side and on a front side with respect to a driver's seat;
a monitor arranged above the air conditioner;
a first frame that separates a front window into upper and lower portions, the front window being arranged in a front portion of the cabin; and
a second frame that is arranged in the front portion on the first lateral side with respect to the first frame and extends upward,
in which the monitor is arranged to overlap with the first frame and the second frame in a front view.

A working machine according to Additional Note (2) is the working machine according to Additional Note (1), in which
the cabin includes a side wall portion arranged on the first lateral side with respect to the driver's seat, and
the air conditioner is arranged adjacent to the side wall portion.

A working machine according to Additional Note (3) is the working machine according to Additional Note (2), further including a beam that supports the monitor,
in which the beam is arranged to protrude from the side wall portion to a second lateral side.

A working machine according to Additional Note (4) is the working machine according to Additional Note (3), in which
the side wall portion includes a horizontal frame extending in a front-rear direction above the air conditioner, and
the beam is fixed to the horizontal frame.

A working machine according to Additional Note (5) is the working machine according to Additional Note (3) or (4), in which the beam includes a beam body arranged below the first frame in the front view.

A working machine according to Additional Note (6) is the working machine according to any one of Additional Notes (1) to (5), further including:
a wiper provided on the front window of the cabin; and
a wiper drive unit that is attached to the front window and drives the wiper,
in which the monitor is arranged to overlap with the wiper drive unit in the front view.

A working machine according to Additional Note (7) is the working machine according to Additional Note (6), in which
the wiper drive unit is attached to the first lateral side of the front window.

A working machine according to Additional Note (8) is the working machine according to any one of Additional Notes (3) to (5), in which
the air conditioner includes an upper surface vent, and
at least a part of the upper surface vent is arranged on a side close to the driver's seat with respect to the monitor in a plan view.

A working machine according to Additional Note (9) is the working machine according to Additional Note (8), in which at least a part of the upper surface vent is arranged on the side close to the driver's seat with respect to the beam in the plan view.

A working machine according to Additional Note (10) is the working machine according to any one of Additional Notes (1) to (9), in which
the air conditioner has an upper surface portion including an opening to which an outside air filter is mounted in a drawable manner, the outside air filter allowing passage of air taken into the air conditioner from an outside of the cabin, and
at least a part of the monitor is arranged outside the opening in a plan view.

A working machine according to Additional Note (11) is the working machine according to Additional Note (10), in which
at least a part of the monitor is arranged behind the opening in the plan view.

A working machine according to Additional Note (12) is the working machine according to Additional Note (10) or (11), in which the monitor is arranged to be inclined toward a second lateral side with respect to a front-rear direction in which the opening extends in the plan view.

A working machine according to Additional Note (13) is the working machine according to any one of Additional Notes (10) to (12), in which
the opening is arranged on the first lateral side in the upper surface portion of the air conditioner in the plan view.

Although the embodiment of the present invention has been described above, the scope of the present invention is not limited thereto, and may be expanded or modified without departing from the gist of the invention.

### [Industrial Applicability]

The present invention is applicable to working machines such as construction machines and agricultural machines.

### LIST OF REFERENCE SIGNS

- 1: Hydraulic excavator (working machine)
- 44a: Driver's seat
- 50: Air conditioner
- 50P: Opening
- 50U: Upper surface portion
- 51: Upper surface vent
- 60: Monitor
- 70: Beam
- 71: Beam body
- 100: Cabin
- 100F: Front portion
- 100FW: Front window
- 100RA: Side wall portion
- 100RA2: Lateral frame
- 110: Wiper drive unit
- AF: Outside air filter
- F1: First frame
- F2: Second frame
- F3: Third frame
- WP: Wiper

## Claims

1. A working machine comprising:
an air conditioner arranged in a cabin on a first lateral side and on a front side with respect to a driver's seat;
a monitor arranged above the air conditioner;
a first frame that separates a front window into upper and lower portions, the front window being arranged in a front portion of the cabin; and
a second frame that is arranged in the front portion on the first lateral side with respect to the first frame and extends upward,
wherein the monitor is arranged to overlap with the first frame and the second frame in a front view.

2. The working machine according to claim 1, wherein
the cabin includes a side wall portion arranged on the first lateral side with respect to the driver's seat, and
the air conditioner is arranged adjacent to the side wall portion.

3. The working machine according to claim 2, further comprising a beam that supports the monitor,
wherein the beam is arranged to protrude from the side wall portion to a second lateral side.

4. The working machine according to claim 3, wherein
the side wall portion includes a horizontal frame extending in a front-rear direction above the air conditioner, and
the beam is fixed to the horizontal frame.

5. The working machine according to claim 3, wherein the beam includes a beam body arranged below the first frame in the front view.

6. The working machine according to claim 1, further comprising:
a wiper provided on the front window of the cabin; and
a wiper drive unit that is attached to the front window and drives the wiper,
wherein the monitor is arranged to overlap with the wiper drive unit in the front view.

7. The working machine according to claim 6, wherein the wiper drive unit is attached to the first lateral side of the front window.

8. The working machine according to claim 3, wherein
the air conditioner includes an upper surface vent, and
at least a part of the upper surface vent is arranged on a side close to the driver's seat with respect to the monitor in a plan view.

9. The working machine according to claim 8, wherein at least a part of the upper surface vent is arranged on the side close to the driver's seat with respect to the beam in the plan view.

10. The working machine according to claim 1, wherein
the air conditioner has an upper surface portion including an opening to which an outside air filter is mounted in a drawable manner, the outside air filter allowing passage of air taken into the air conditioner from an outside of the cabin, and
at least a part of the monitor is arranged outside the opening in a plan view.

11. The working machine according to claim 10, wherein at least a part of the monitor is arranged behind the opening in the plan view.

12. The working machine according to claim 10, wherein the monitor is arranged to be inclined toward a second lateral side with respect to a front-rear direction in which the opening extends in the plan view.

13. The working machine according to any one of claims 10 to 12, wherein the opening is arranged on the first lateral side in the upper surface portion of the air conditioner in the plan view.
